# EUROPEAN PATENT SPECIFICATION

(11) **EP 0 826 559 B1**
(45) Date of publication and mention of the grant of the patent: **10.04.2002**
(21) Application number: 97402046.3
(22) Date of filing: 03.09.1997
(51) Int. Cl.: B60R 16/02

(54) **A corrugated tube and an automatic wire-loading device therefor**
Ein Hüllwellrohr und ein automatischer Kabellader
Un tube ondulé et un chargeur automatique de cables

(30) Priority: 03.09.1996 JP 23278396; 16.10.1996 JP 27344296
(43) Date of publication of application: 04.03.1998
(73) Proprietor: SUMITOMO WIRING SYSTEMS, LTD., Yokkaichi City Mie 510 (JP)
(72) Inventor: Kawamura, Shigeto, c/o Sumitomo Wiring Syst. Ltd., Yokkaichi-City, Mie 510 (JP)
(74) Representative: Bertrand, Didier

(56) References cited:
- EP-A- 0 114 213
- DE-U- 8 903 070
- GB-A- 2 233 163

## Description

The present invention relates to a wiring harness used in automobiles, a device for protecting it, and a method for loading and locking this harness. More specifically, the invention concerns a corrugated tube, through which the wiring harness is passed and protected.

Such a corrugated tube may have a longitudinal slit along the axial direction. In this construction, the slit is first opened and a group of electrical wires is loaded from this opened side. After the loading, the slit must be shut.

The invention also relates to a device for passing a harness consisting of a group of electrical wires into the corrugated tube. The device is able to open a longitudinal slit in the corrugated tube, insert the group of wires therein, and close and lock the slit.

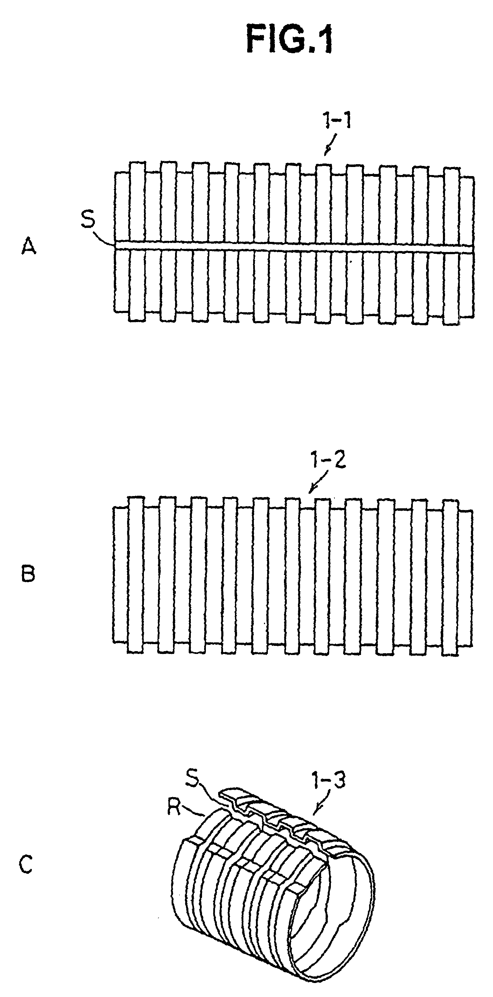

In the wiring harnesses used in automobiles, the main portion thereof is protected by being placed within a corrugated tube. Such a corrugated tube can have a longitudinal slit S along the axial direction, as shown in Fig. 1 A ( reference 1-1), or can have no slit, as shown in Fig. 1 B (reference 1-2). In the former case, the slit portion can have an overlapping zone R in the axial direction, as shown in Fig. 1 C (reference 1-3).

In the case of the corrugated tube without slit 1-2, when a connector housing is previously mounted on an end portion of the electrical wires, these cannot be passed through the corrugated tube 1-2. Therefore, the electrical wires have first to be passed through the corrugated tube 1-2, and then the connector housing is mounted on the end portion of the wires. In this latter case, the end portion of each electrical wire cannot be loaded into the connector housing by an automatic process. This prevents the automation of the mounting process of the wiring harness.

In the case of the corrugated tube with a slit 1-1, the group of electrical wires are loaded by opening the slit. The connector housing can thus be connected to the group of electrical wires beforehand. Accordingly, the end portion can be inserted into the connector housing in an automatic way.

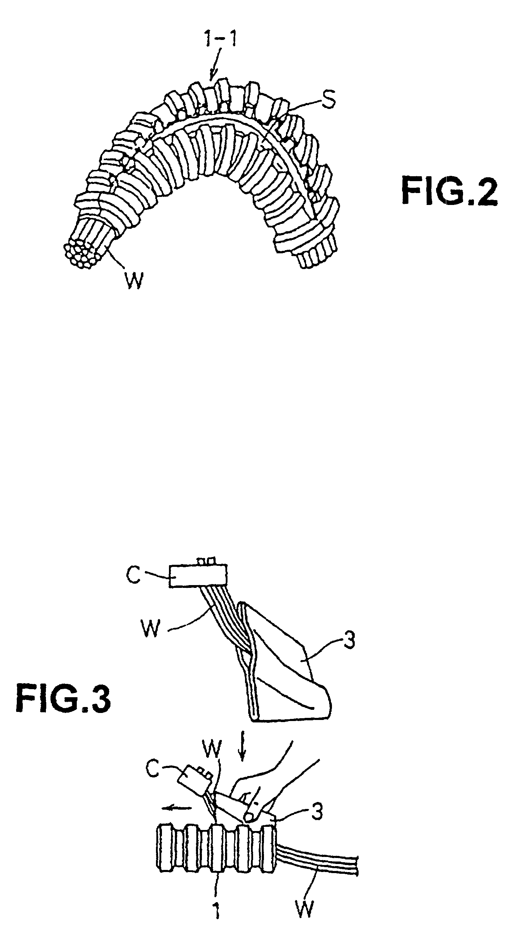

However, when the zone protected by the corrugated tube 1-1 is bent as shown in Fig. 2, the slit S may be opened. It is therefore necessary to close the slit after the electrical wires have been inserted into the tube. To this end, a tape can be wound around the outer circular surface of the tube 1-1. However, this tape-winding work is cumbersome.

The case of the corrugated tube with an overlapping slit 1-3 shown in Fig. 1 C differs from the above, solely in that both sides of the slit are configured so as to form an overlapped zone R. However, it is still necessary to use tape in order to securely close the slit. As mentioned, this work is cumbersome.

Alternatively, EP 0 114 213 discloses, according to the features of the preamble of claim a corrugated tube for electric installation, comprising locking means. This tube includes a longitudinal slit along the length of the tube, and adjacent longitudinal zones flanking the slit line. Both zones are then configured to form a pair of complementary recess and protrusion which extends along the slit line, thereby providing the locking means. The locking means thus formed are then overlapped to each other, to form a gas-tight and water-proof cable enclosure.

To insert the electrical wires into the above-mentioned tube with a slit, a device 3 shown in Fig. 3 is usually used. In this case, the electrical wires W are previously passed through the device 3. The slit S is then opened by the device 3, whilst, at the same time, the wires W are transferred and installed into the corrugated tube. In this construction, the connector housing C can be connected beforehand to the wire end portion.

However, this type of device only serves to pass the wires W into the corrugated tube and the taping work cannot be omitted.

To overcome this problem, longitudinal zones flanking the slit may be defined on the outer surface of the tube and the peak portions included in those zones may be provided with corresponding female and male locking means extending from the slit in the circumferential direction. These female and male portions may consist respectively of a sequential concave and convex configuration, viewed from the axial direction of the tube, which is formed on some or all of the above peak portions. This configuration extends from the slit side along the circumferential direction. When these male and female configurations are superposed, the tube is locked.

When such a tube is used, there is no need to close the slit by taping. However, a supplementary work of superposing the female and male locking means has to be added.

When the locking means are installed on all the peak portions along the entire length of the corrugated tube, locking work is rather cumbersome. Further, when the electrical wires are tightly contained in the tube, a strong unlocking force is exerted on the slit of the tube. Then, a correspondingly strong force is needed in order to superpose the female and male locking means. Such a locking step incurs a heavy duty operation for workers. Moreover, after the electrical wires are passed through the tube, the tube has to be locked by a distinctive step. This procedure needs a two-step operation and takes time.

To enable automation of the operation of inserting the wire end portion into the connector housing, a corrugated tube is preferably equipped with a slit. The slit may be designed to be closed by a one-touch-system. The taping work may thus be rendered unnecessary. Further, it is desirable to combine the loading of the electrical wires into the tube and the automatic locking of the tube thereafter.

To this end, there is provided a corrugated tube according to claim 1. This corrugated tube is for protecting a wiring harness consisting of a plurality of electrical wires, the tube extends in a longitudinal direction and has an outer surface of circular section having alternating peak and trough sections formed along the longitudinal direction thereof, the tube comprises a longitudinal slit, thereby defining two zones proximal thereto facing each other across the slit, each zone comprising peak portions, at least some of the peak portions of each zone having a sequential concave and convex configuration, viewed from the longitudinal direction, each of the configurations extending from the slit along the circumferential direction of the tube, so that in the two zones female and male locking means are formed respectively, the male locking means being fitted to the female locking means, during use, from the inside of the tube, so that the concave and convex configurations of the male locking means are securely superposed with the corresponding concave and convex configurations of the female locking means, whereby the slit is closed and locked.

In this corrugated tube, the female locking means may have a broader width along the longitudinal direction than that of the male locking means.

The female locking means may have a sequential convex, concave and convex configuration, the configuration forming a series of a successive L-shapes, viewed from the longitudinal direction, and extending from the slit along the circumferential direction, whilst the male locking means have a sequential convex, concave and convex configuration, the configuration forming a series of successive V-shapes, viewed from the longitudinal direction, and extending from the slit in the circumferential direction, whereby the plurality of electrical wires are loaded by opening the slit and whereby the slit is closed and locked by superposing the female locking means and the male locking means.

There is also provided a method according to claim 7 of automatically loading and locking a plurality of electrical wires into a corrugated tube, the tube comprising a slit and female and male locking means, the method comprising the steps of:
a) preparing a device comprising a tubular guiding unit and a tubular locking unit, each extending in a longitudinal direction, the guiding unit having a top projection part, a bottom slit-opening part and a slant tube part therebetween and having first and second ends, the slant tube part being obliquely arranged from the top projection part at the first end towards the bottom slit-opening part at the second end, the locking unit having a first and a second end and being configured such that it can contain the corrugated tube and lock the female and male locking means, the second end of the tubular guiding unit and the first end of the tubular locking unit being longitudinally connected, so that the slant tube part and the tubular locking unit are arranged with an appropriate inclination in the longitudinal direction ;
b) loading the plurality of electrical wires into the tubular guiding and locking units;
c) laterally fitting the bottom slit-opening part of the tubular guiding unit into the slit, whilst fitting the corrugated tube into the tubular locking unit; and,
d) causing a relative movement between the tubular locking unit and the corrugated tube, whereby successively, the slit is opened, the electrical wires are loaded into the corrugated tube, and the female and male locking means are locked.

There is further provided a device according to claim 8 for loading and locking a plurality of electrical wires into the corrugated tube, the tube extending in a longitudinal direction, and comprising an inner and an outer diameter and an outer surface of circular section having alternating peak and trough sections along the longitudinal direction, the tube comprising a longitudinal slit, thereby forming two zones proximal thereto facing each other across the slit, each zone comprising peak portions, at least some of the peak portions of each zone having a sequential concave and convex configuration, viewed from the longitudinal direction, each of the configurations extending from the slit along the circumferential direction, so that in the two zones female and male locking means are formed respectively, the male locking means being fitted to the female locking means, during use, from the inside of the tube, so that the concave and convex configurations of the male locking means are securely superposed with the corresponding concave and convex configurations of the female locking means, whereby the slit is closed and locked, the device comprising:
a) a tubular guiding unit for guiding the plurality of electrical wires, the unit having a first and a second end and comprising at least a slant tube part obliquely extending from the first end towards the second end, the slant tube part having an external diameter smaller than the internal diameter of the corrugated tube, and
b) a tubular locking unit for locking the slit, the locking unit having a first and a second end, the unit having an inner circular surface along a longitudinal direction and a gradually decreasing inner diameter from the first end towards the second end along the longitudinal direction, the second end having the inner diameter equal to the external diameter of the corrugated tube when it is locked, the tubular locking unit being configured such that, in use, it contains the corrugated tube and locks the female and male locking means, the second end of the tubular guiding unit and the first end of the tubular locking unit being longitudinally connected, so that the slant tube part and the tubular locking unit are arranged with an appropriate inclination in the longitudinal direction and adapted, in use, to contain the plurality of electrical wires, such that when the slit-opening part is inserted into the slit, the tubular locking unit contains the corrugated tube and such that when there is a relative movement between the tubular guiding unit and the corrugated tube, the plurality of electrical wires are transferred into the corrugated tube, the female and male locking means are gradually brought closer together towards the second end of the tubular locking unit and the slit is locked.

In the above device, the tubular guiding unit may further comprise a slit-opening part having a substantially round cross-section at the first end of the tubular guiding unit and the slit-opening part gradually fuses with the slant tube part towards the second end thereof, whereby, when there is a relative motion between the slit-opening part and the corrugated tube, the slit is gradually opened and the plurality of electrical wires are loaded into the corrugated tube.

In the above device, the tubular guiding unit comprising the slant tube part and the slit-opening part on the one hand, and the tubular locking unit on the other hand, are respectively an integral material having two wings and are formed by bending the material into the two wings at the side of the slit-opening part, whereby a pair of opposing projection parts are formed along the longitudinal direction at the position distal to the slit-opening part and the plurality of electrical wires are loaded by opening the pair of projection parts, and wherein the tubular guiding unit and the tubular locking unit are connected by the projection parts.

The inner circular surface of the tubular locking unit may be provided with a pair of longitudinal ribs spaced from each other and adapted to fit, in use, with corresponding concave shape of the female and male locking means, the spacing of the pair of ribs being gradually narrowed from the first end of the tubular locking unit towards the second end thereof, whereby, when the corrugated tube approaches the second end, the female and male locking means are superposed by virtue of a force exercised by the narrowing ribs.

The above and other objects, features and advantages of the invention will be made apparent from the following description of the preferred embodiments, given as a non-limiting example, with reference to the accompanying drawings, in which :
- Fig. 1, A, B and C, show a known corrugated tube with a slit, without slit and with an overlapping zone, respectively;
- Fig. 2 schematically shows a known corrugated tube when the slit is deflected;
- Fig. 3 shows a known device for loading electrical wires into a corrugated tube, and illustrates its operation ;
- Fig. 4, A and B respectively show a cross-sectional view and a perspective view of an embodiment of the corrugated tube according to the present invention ;
- Fig. 5 shows a cross-sectional view of the corrugated tube with a slit, when the slit is closed and locked ;
- Fig. 6 shows a plan view of female and male locking means before locking;
- Fig. 7, A and B, show a perspective view of a preliminarily formed corrugated tube and a cross-sectional view thereof when forming the slit in a container, respectively;
- Fig. 8, A and B, show a cross-sectional view of the corrugated tube when loaded with electrical wires and when locked, respectively ;
- Fig. 9 illustrates a process of loading wires into the corrugated tube using the loading-and-locking device according to the invention ;
- Fig. 10 shows a perspective view of the loading-and-locking device of Fig. 9;
- Fig. 11 shows a cross-sectional view of the loading-and-locking device of Fig. 9;
- Fig. 12 shows a schematic side view of the loading-and-locking device of Fig. 9 ;
- Fig. 13 shows a schematic plan of the loading-and-locking device of Fig. 9;
- Fig. 14, A and B, show cross sections along the lines A-A and B-B, respectively, of Fig. 9 ; and
- Fig. 15 shows a variant type of the loading-and-locking device according to the present invention.

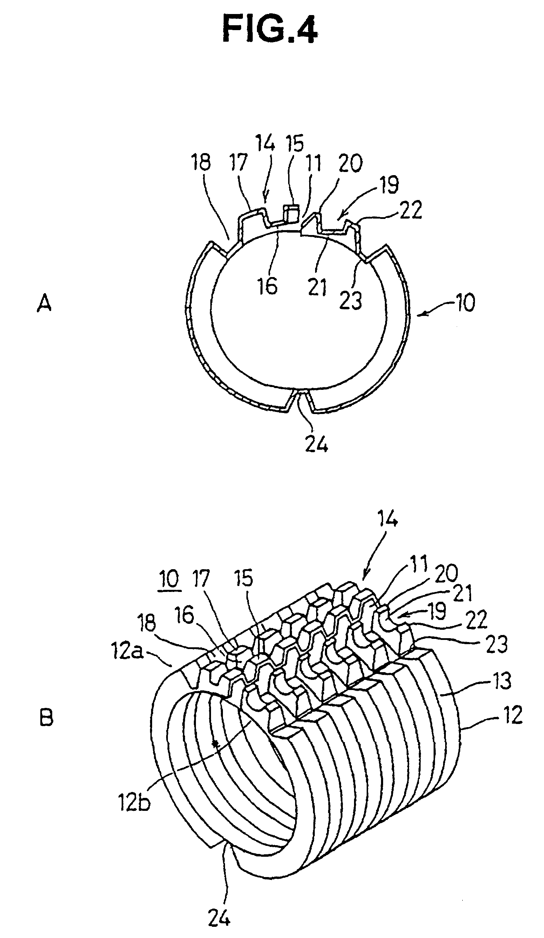

As shown in Fig. 4 A and B, the corrugated tube 10 according to the present embodiment comprises a plurality of circular peak sections 12 and trough sections 13 on its outer surface. This peak and trough section are alternatingly provided thereon at a predetermined pitch along the axial (longitudinal) direction. Further, the tube has a longitudinal slit 11 all along the longitudinal direction of the tube.

The longitudinal slit 11 forms separated, first and second longitudinal zones along the slit, the first longitudinal zone defining a plurality of first peak sections 12a, whilst the second longitudinal zone defines a plurality of second peak sections 12b. The first and second peak sections are provided with a concave and convex shape respectively, so that these shapes are closed by one-touch manipulation and the slit is locked.

These first peak sections 12a constitute female locking means 14. These means 14 comprise, sequentially from the slit side along the circumferential direction, an inserting convex shape 15 having a cross-section of L shape and an open edge, a stopper concave shape 16, a stopper convex shape 17 and a positioning concave shape 18 for defining the position when cutting (see hereinafter). The second peak sections 12b constitute male locking means 19. These means 19 comprise correspondingly a receiving convex shape 20 having cross-section of inverted V shape (in the figures), a stopper concave shape 21, a stopper convex shape 22 and a positioning concave shape 23 for defining the position when cutting.

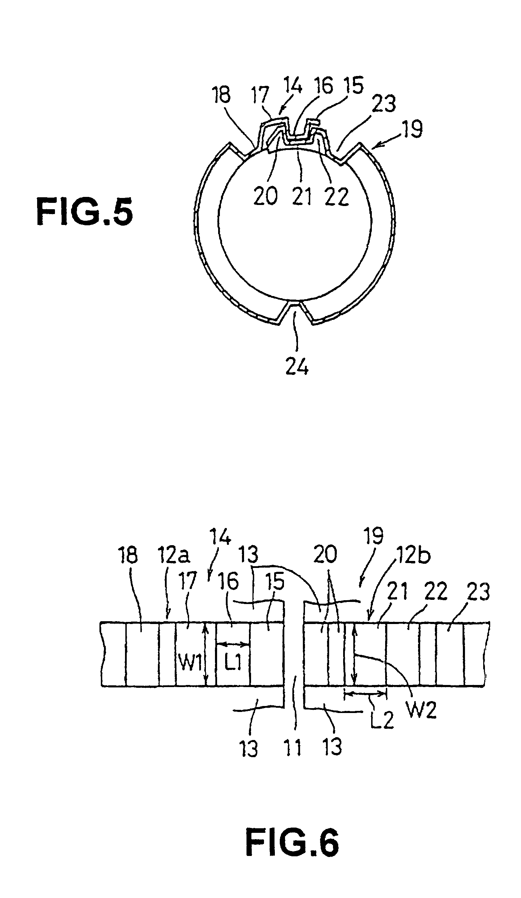

As shown in Fig. 6, the insertion convex shape 15, stopper concave shape 16 and stopper convex shape 17 of the female locking means 14 have a width W1 along the longitudinal direction, which is broader than the width W2 of the corresponding shapes 20, 21, 22 of the male locking means 19 (W1 > W2). Thus, the male locking means 19 can be easily pushed under the female locking means 14 (viewed from the tube axis).

Also, the corrugated tube 10 is provided with a longitudinally notched line 24 having a cross-section of approximate V shape. This notched line extends on the external longitudinal position of the tube distal to the slit 11. Further, the stopper concave shape 16 of the female locking means 14 has a length L1 around the circumferential direction, which is shorter than the length L2 of the corresponding stopper concave shape 21 of the male locking means 19 (L1 < L2).

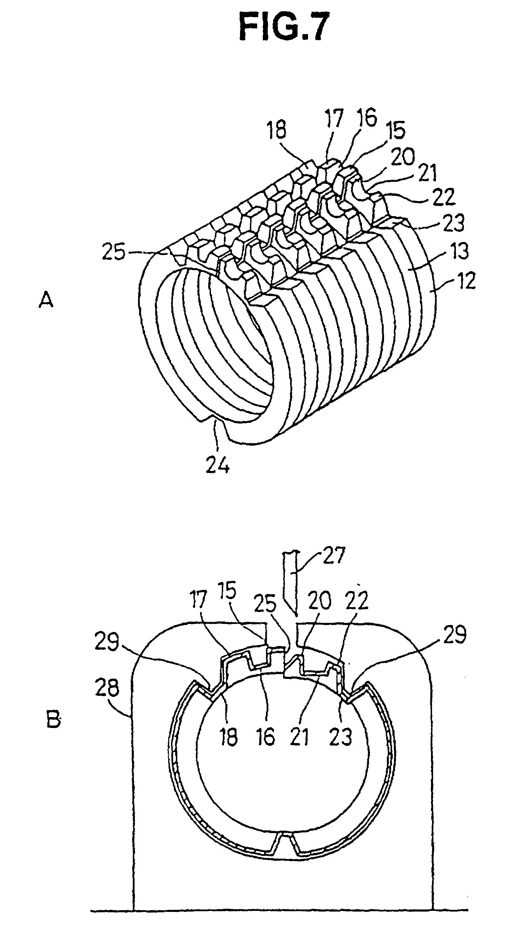

As shown in Fig. 7 A and B, the corrugated tube 10 is preliminarily fabricated in a circular form in which the edge of the inserting convex shape 15 of the female locking means 14 and that of the receiving convex shape 20 of the male locking means 19 are integrally bound by a radially rising wall 25. The wall 25 is then cut by a cutter 27 to form a slit 11, whereby female locking means 14 and male locking means 19 are formed on each side of the slit 11. When cutting with the cutter 27, the tube 10 is installed in a container 28 having a pair of holding ribs 29. These ribs are inserted into the positioning concave shapes 18, 23 respectively, so that the tube 10 is held in a predetermined position.

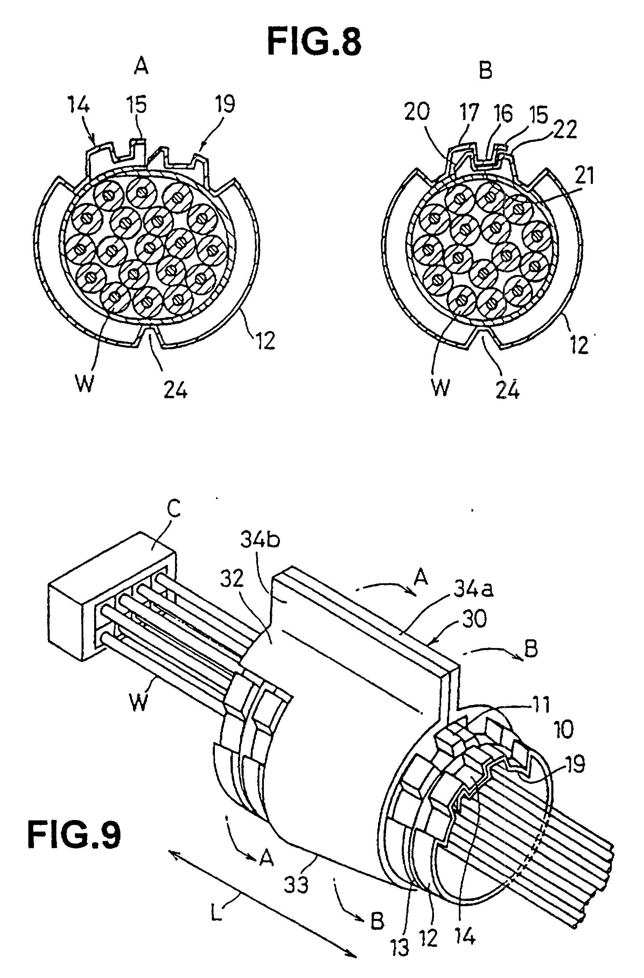

Then, a connector housing (not shown in the figures) is mounted at the end of a plurality of electrical wires. In this state, as shown in Fig. 8A, the slit 11 of the corrugated tube 10 is opened and the above connector housing is laterally inserted thereinto through the slit.

Subsequently, the female and male locking means 14, 19 on the opposing sides of the slit 11 are brought closer together. By further pushing, the male locking means 19 is fitted into the radially inner side of the female locking means 14, as shown in Fig. 8 B as well as in Fig. 5. Thanks to the notched line 24, provided on the tube at the distal position to the slit 11, the opposing sides of the slit 11 are smoothly brought together and lapped.

In this process, the receiving convex shape 20 (inverted V form in the figures) provided at the edge of the male locking means 19, is inserted under the inserting convex shape 15 (L form), provided at the edge of the female locking means 14. Further, the receiving convex shape 20 is forwarded over the stopper concave shape 16 and fitted into the stopper convex shape 17. At the same time, the stopper concave shape 21 and convex shape 22 of the male locking means 19 are tightly superposed on the inner side of the stopper concave shape 16 and the inserting convex shape 15 of the female counter part 14, respectively.

As has been seen, the three sequential concave and convex formations of the male locking means 19 are fitted with the corresponding counter parts at the inside of the female locking means 14. Especially, the fitted stopper concave shapes 16, 21 are flanked by the respectively fitted stopper convex shapes. Further, all the peak sections 12 at the sides of the slit 11 are fitted, so that the locking of the female locking means 14 and the male locking means 19 becomes secure. Accordingly, taping the slit 11 to prevent its opening, which was required in the prior art, is unnecessary in the tube of the invention.

However, the present invention is not limited to the aforementioned embodiments. The locking means may be provided either only on some of the peak sections near the slit edges, or at a predetermined pitch along the slit 11, instead of on all of the peak sections along the slit line as mentioned above.

Further, preferably the locking means are provided on the peak sections of the tube, but not on the trough sections thereof. Thanks to this configuration, the flexural ability of the tube is not impaired. After being loaded with a wiring harness, the tube can still be curved or bent as desired.

Moreover, it suffices to cut only part of a circular corrugated tube, in order to yield a slit and female and male locking means. Carrying into practice of the present invention is therefore very easy.

The present invention also relates to a conjugated method of loading a plurality of electrical wires W into the above-mentioned corrugated tube 10 and of locking the tube. It further concerns a device specifically designed for this purpose.

Fig. 9 shows a corrugated tube 10 and a wire-loading device 30 by which a plurality of electrical wires are passed into the corrugated tube and the slit of the tube is closed and locked.

The wire-loading device 30 has a shape shown in Figs. 9 to 13. A tubular guiding unit 32 for guiding the electrical wires comprises at least a slant tube part 32a, 32b. This unit 32 is conjugated with a tubular locking unit 33 in the axial direction through appropriate means, such that the slant tube part and the tubular locking unit 33 are connected together with a predetermined degree of inclination. The two units can be formed integrally of a resin. The tubular guiding unit 32 may consist of a left and right wing 32a, 32b integrally linked at the underside (in the figures) of each wing. Likewise, the tubular locking unit 33 may consist of a left and a right wing 33a, 33b integrally linked at the underside of each wing. The two wings of both units 32, 33 extend upwardly, thereby forming a projection having opposed portions 34a, 34b. Thus, the projection is continuously formed from the tubular guiding unit 32 to the tubular locking unit 33. The two units 32, 33 can be opened by separating the opposed portions 34a, 34b of the projection, so that the electrical wires W can be passed into both tubular portions.

The slant tube part 32a, 32b of the tubular guiding unit 32 has an external diameter R1 smaller than the internal diameter of the corrugated tube 10. The tubular guiding unit 32 may also be provided with a slit-fitting part 35 for opening the slit 11 of the corrugated tube 10. The slit-fitting part 35 is provided under the slant tube part 32a, 32b of the tubular guiding unit 32 and extends horizontally (in the figures). This slit-fitting part 35 is formed by superposing a cross-sectionally semicircular portion of both wings and is linked to the tubular guiding unit 32 through a neck part 35a. When both wings are superposed, the slit-fitting part 35 forms a round cross-section having a diameter somewhat smaller than that of the corrugated tube. As the tubular guiding unit 32 extends towards its connecting zone to the tubular locking unit 33, the slit-fitting part 35 merges into the slant tube part 32a, 32b, until its outer circular surface continuously fuses with the outer circular surface 32c of the slant tube part at the bottom thereof (in the figures).

Thus, the slant tube part 32a, 32b of the left and right wings of the tubular guiding unit 32 is continuously formed with the left and right wings 33a, 33b of the tubular locking unit 33, respectively, so that the locking-unit side opening 32d of the tubular guiding unit 32 is arranged facing an opening 33c of the tubular locking unit 33. Also in the linking zone of both tubular units 32, 33, there is formed a space S between the bottom-side outer surface of the tubular guiding unit 32 and the bottom-side inner surface of the tubular locking unit 33. This space S corresponds to the thickness of the corrugated tube 10.

In this structure, when the slit-opening part 35 is fitted into the slit 11 and a relative motion is caused between the corrugated tube 10 and the device 30, the slit 11 is open at its widest at the merging point of the slit-fitting part 35 with the slant tube part 32a, 32b. Then, the slant tube part is fitted into the corrugated tube and the latter is in turn fitted gradually into the tubular locking unit 33. Thus, the wires extending from the slant tube part to the tubular locking unit are automatically loaded into the corrugated tube through the open slit.

When a number of wires are to be passed through the corrugated tube 10, locking usually becomes difficult. Even in such a case, the device 30 enables easy locking, merely by holding the projection parts and causing relative movement between the corrugated tube and the tubular locking unit 33.

The tubular locking unit 33 has a gradually narrowing diameter along the axial direction L, from the tubular guiding unit end towards the other end thereof. The narrow end 33d is designed to have an inner diameter equal to the outer diameter of the corrugated tube 10 when it is locked.

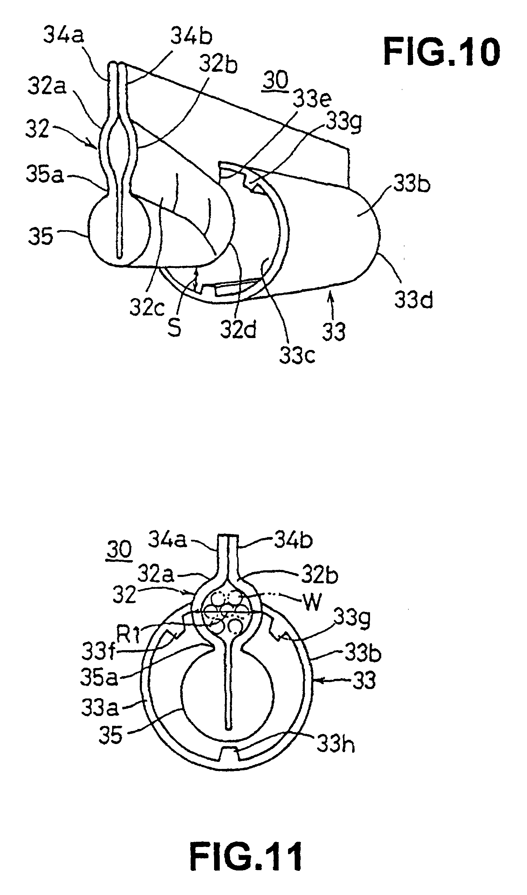

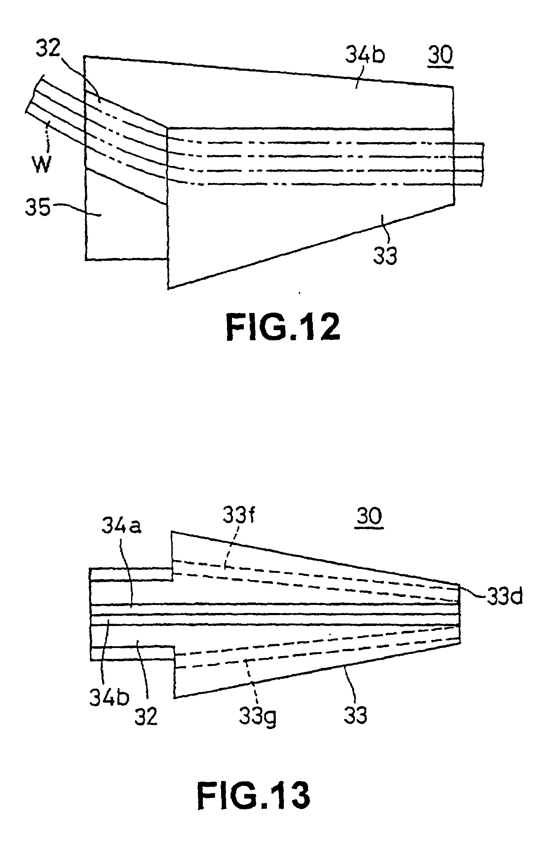

The inner circular surface of the tubular locking unit 33 is provided with a pair of ribs 33f, 33g at both sides of the upper opening 33e thereof (see Fig. 10). The pair of ribs fit with the concave shapes 18, 23 of the female and male locking means 14, 19 of the tube 10. As shown in Fig. 13, the ribs 33f, 33g extend along the axial direction. The distance D between them is gradually narrowed towards the narrow end 33d of the tubular locking unit, so that the distance D at this end becomes appropriate to make the female locking means 14 fit with the male locking means 19. Further, the inner surface of the tubular locking unit 33 is provided with a rib 33h at its bottom (in Fig. 11). This rib 33h is fitted with the notched line 24 in the corrugated tube 10 in a freely slidable way.

By using such a device, the electrical wires W are loaded into the corrugated tube 10 and the slit thereof is locked, as follows.

The opposed portions 34a, 34b of the projection of the device 30 are opened and the wires are loaded extensively from the tubular guiding unit 32 to the tubular locking unit 33, as shown by dots and lines in Figs. 11 to 13. In this state, the wires exit from the locking-side opening 32d of the slant tube part 32a, 32b and are continuously passed through the guide-side opening 33c of the tubular locking unit 33.

The corrugated tube 10 is then held, with the slit 11 facing upwards, and the slit is opened. The neck 35a linking the tubular guiding unit 32 and the slit-fitting part 35 is then inserted into this slit 11. Thus, the slit-fitting part 35 is fitted into the corrugated tube 10.

Thereafter, the corrugated tube 10 is moved towards the tubular locking unit 33. Then, as the outer circular surface of the slit-fitting part 35 continuously fuses with the outer circular surface 32c of the tubular guiding unit 32, the slit 11 is gradually opened wider and wider. When the edge of the corrugated tube 10 is advanced into the guiding-side opening 33c of the tubular locking unit 33, the bottom pail of the corrugated tube 10 is inserted into the space S formed between the tubular guiding unit 32 and the inner surface of the tubular locking unit 33. The corrugated tube 10 is thus forwarded into the tubular locking unit 33.

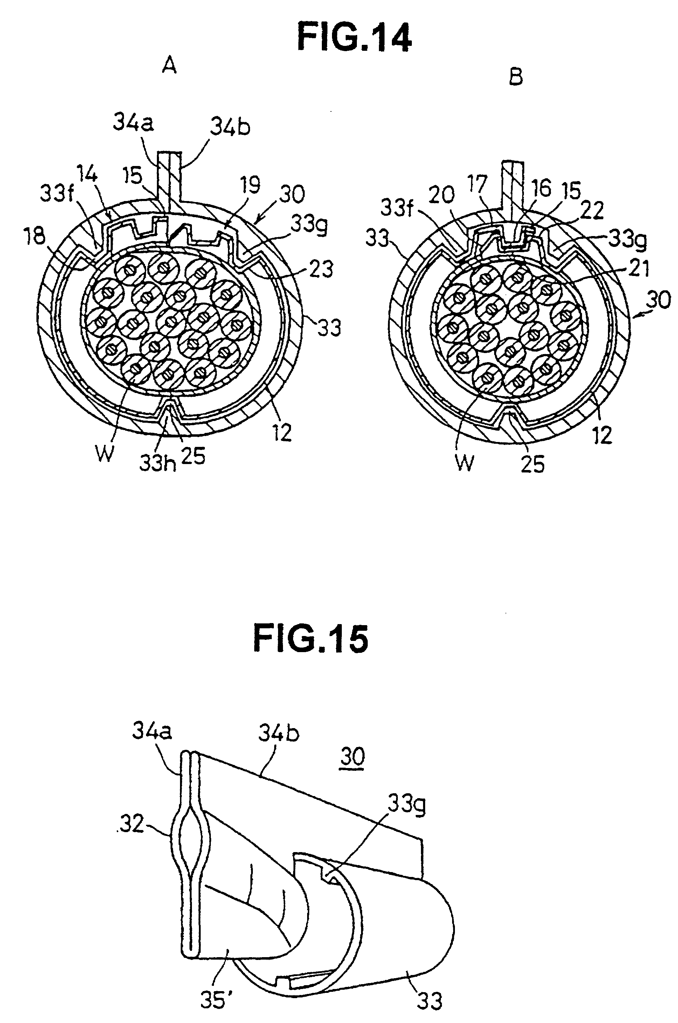

When the notched line 24 of the tube 10 is fitted with the rib 33h of the tubular locking unit 33, the pair of ribs 33f, 33g on the tubular locking unit 33 are also fitted into the concave shapes 18, 23 provided at the upper part of the tube 10, as shown in Fig. 14 A.

When the corrugated tube 10 is inserted along the inner circular surface of the tubular locking unit 33, the electrical wires contained in the tubular guiding and locking units 32, 33 are put into the corrugated tube 10, as shown in Fig. 14 A. Namely, the electrical wires contained in the tubular locking unit 33 are automatically transferred into the corrugated tube 10.

As the corrugated tube 10 advances in the tubular locking unit 33 towards its end 33d, the distance between the ribs 33f, 33g is narrowed, so that the concave shapes 18, 23 fitted with these ribs are brought closer together at the end part of the tube 10 and the slit 11 is actuated for closure. When the tube 10 arrives at the edge 33d of the tubular locking unit 33, the female and male locking means 14, 19 of the tube 10 are completely superposed and the slit 11 is closed, as shown in Fig. 14 B.

Accordingly, when the corrugated tube 10 exits from the edge 33d of the device 30, the wires are loaded in the tube 10 and the slit 11 is locked. Although, in the above-description, the corrugated tube 10 is moved vis-à-vis the device 30, it can be done inversely to obtain the same result and/or both items can be moved simultaneously.

Fig. 15 shows a variant type of the device 30, wherein the slit-fitting part 35' provided at the bottom part of the tubular guiding unit 32 has a flat shape. This part 35' is formed by flatly bending the left and right wings of the tubular guiding unit 32, at the position located under (in Fig. 15) the slant tube part 32a, 32b.

In this configuration, the slit-fitting part 35' is inserted into the slit 11 of the tube 10. The tube 10 or the device 30' (or both) is then moved in the longitudinal direction. The slit 11 reaches the outer circular surface 32c of the slant tube part 32a, 32b and the slit 11 is automatically widely opened. The other functions are the same as in the aforementioned embodiment.

The bottom part of the tubular guiding unit 32 may be formed so as not to include a slit-fitting part. In such a case, the slit 11 of the corrugated tube 10 is directly opened along the bottom outer surface of the guiding unit 32. When the slit 11 is opened, the corrugated tube 10 is inserted into the tubular locking unit 33 and fitted therewith. Then, the electrical wires W are loaded in the tube 10 and the slit 11 is locked.

By using the device 30 according to the invention, taping work, which was necessary in the prior art, can be suppressed, so that a worker's workload is greatly reduced and the work efficiency is enhanced.

Further, such a device can be easily manufactured by molding a resin and does not raise cost.

## Claims

1. A corrugated tube (10) for protecting a wiring harness, said tube extending in a longitudinal direction and having an outer surface of circular cross section having alternating peak (12) and trough (13) sections along said longitudinal direction, said tube comprising a longitudinal slit (11), thereby defining two zones proximal thereto facing each other across the slit, **characterised in that** each zone comprises portions of said peak sections (12), and at least some of said portions of said peak sections (12) included in each zone have a sequential concave and convex configuration, viewed from said longitudinal direction, each of said configurations extending from said slit along said circumferential direction, such that, in said two zones, female (14) and male (19) locking means are formed, respectively, only on said at least some of said portions of said peak sections (12) included in said each zone, so that the tube covering the wiring harness can be bent as desired,
whereby said male locking means (19) are fitted with said female locking means (14) from the inside of said tube, and said concave and convex configurations of said male locking means (19) are securely superposed with corresponding concave and convex configurations of said female locking means (14).

2. The corrugated tube (10) according to claim 1, wherein said sequential concave and convex configuration forming said female locking means (14) comprises an inserting convex shape (15) having a cross-section of L shape, a stopper concave shape (16) and a stopper convex shape (17), and wherein said sequential concave and convex configuration forming said male locking means (19) comprises a receiving convex shape (20) having a cross-section of inverted V shape, a stopper concave shape (21) and a stopper convex shape (22).

3. The corrugated tube (10) according to claim 1 or 2, which further includes positioning concave shapes (18, 23).

4. The corrugated tube (10) according to any one of claims 1 to 3, which further includes a notched line (24).

5. The corrugated tube (10) according to any one of claims 1 to 4, wherein said female locking means (14) have a broader width (W1) along said longitudinal direction than that (W2) of said male locking means (19).

6. The corrugated tube (10) according to any one of claims 1 to 5, wherein said female locking means (14) have a sequential convex, concave and convex configuration (15, 16, 17, 18), said configuration forming a series of successive L shapes, viewed from said longitudinal direction, and extending from said slit along said circumferential direction, whilst said male locking means (19) have a sequential convex, concave and convex configuration (20, 21, 22, 23), said configuration forming a series of successive V-shapes, viewed from said longitudinal direction, and extending from said slit (11) in said circumferential direction, whereby said plurality of electrical wires (W) are loaded by opening said slit and whereby said slit is closed and locked by superposing said female locking means and said male locking means.

7. A method of automatically loading and locking a plurality of electrical wires (W) into a corrugated tube (10) according to any one of claims 1 to 6, said tube comprising a slit 11, **characterised in that** said tube further comprises female (14) and male (19) locking means, and that said method comprises the steps of:
a) preparing a device (30) comprising a tubular guiding unit (32) and a tubular locking unit (33), each extending in a longitudinal direction, said guiding unit having a top projection part (34a, 34b), a bottom slit-opening part (35, 35') and a slant tube part (32a, 32b) therebetween and having first and second ends, said slant tube part being obliquely arranged from said top projection part at said first end towards said bottom slit-opening part at said second end, said locking unit having first and second ends and being configured such that it can contain said corrugated tube and lock said female and male locking means, said second end of said tubular guiding unit and said first end of said tubular locking unit being longitudinally connected, so that said slant tube part and said tubular locking unit are arranged with an appropriate inclination in said longitudinal direction ;
b) loading said plurality of electrical wires into said tubular guiding and locking units ;
c) laterally fitting said bottom slit-opening part of said tubular guiding unit into said slit, whilst fitting said corrugated tube into said tubular locking unit; and
d) causing a relative movement between said tubular locking unit and said corrugated tube, whereby successively, said slit is opened, said electrical wires are loaded into said corrugated tube, and said female and male locking means are locked.

8. Device (30) for loading and locking a plurality of electrical wires (W) into a corrugated tube according to any one of claims 1 to 6, **characterised in that** said device comprises :
a) a tubular guiding unit (32) for guiding said plurality of electrical wires, said unit having first and second ends and comprising at least a slant tube part (32a, 32b) obliquely extending from said first end towards said second end, said slant tube part having an external diameter smaller than the internal diameter of said corrugated tube ; and
b) a tubular locking unit (33) for locking said slit, said locking unit having a first and a second end, said unit having an inner circular surface along a longitudinal direction and a gradually decreasing inner diameter from said first end towards said second end along said longitudinal direction, said second end having said inner diameter equal to the external diameter of said corrugated tube when it is locked, said tubular locking unit being configured such that, in use, it contains said corrugated tube and locks said female and male locking means, said second end of said tubular guiding unit and said first end of said tubular locking unit being longitudinally connected, so that said slant tube part and said tubular locking unit are arranged with appropriate inclinations in said longitudinal direction and adapted, in use, to contain said plurality of electrical wires (W), such that said slit-opening part is inserted into said slit (11), said tubular locking unit contains said corrugated tube and such that when there is a relative movement between said tubular guiding unit and said corrugated tube, said plurality of electrical wires are transferred into said corrugated tube, said female (14) and male (19) locking means are gradually brought closer together towards said second end of said tubular locking unit and said slit is locked.

9. The device according to claim 8, wherein said tubular guiding unit (32) further comprises a slit-opening part (35, 35') having a substantially round cross-section at said first end of said tubular guiding unit and said slit-opening part gradually fuses with said slant tube part (32a, 32b) towards said second end thereof, whereby, when there is a relative motion between said slit-opening part and said corrugated tube, said slit is gradually opened and said plurality of electrical wires (W) are loaded into said corrugated tube.

10. The device according to claim 8 or 9, wherein said tubular guiding unit (32) comprising said slant tube part (32a, 32b) and said slit-opening part (35) on the one hand, and said tubular locking unit (33) on the other hand, are respectively an integral material having two wings and are formed by bending said material into said two wings at the side of said slit-opening part, whereby a pair of opposing projection parts (34a, 34b) are formed along said longitudinal direction at the position distal to said slit-opening part and said plurality of electrical wires (W) are loaded by opening said pair of projection parts, and wherein said tubular guiding unit and said tubular locking unit are connected by said projection parts.

11. The device according to any one of claims 8 to 10, wherein said inner circular surface of said tubular locking unit (33) is provided with a pair of longitudinal ribs (33f, 33g) spaced from each other and adapted to fit, in use, with corresponding concave shapes (18, 23) of said female (14) and male (19) locking means, said spacing of said pair of ribs being gradually narrowed from said first end of said tubular locking unit towards said second end thereof, whereby, when said corrugated tube (10) approaches said second end, said female and male locking means are superposed by virtue of a force exercised by said narrowing ribs.

## Patentansprüche

1. Wellrohr bzw. -röhre bzw. -schlauch (10) zum Schützen eines Kabelbaums, wobei sich das Rohr in einer Längsrichtung erstreckt und eine äußere Fläche bzw. Oberfläche, welche abwechselnde bzw. alternierende Spitzen- bzw. Berg- (12) und Mulden- bzw. Tal- (13) Abschnitte entlang der Längsrichtung aufweist, wobei das Rohr einen longitudinalen Schlitz (11) umfaßt, wodurch zwei Zonen in der Nähe davon definiert werden, welche einander gegenüberliegen über den Schlitz, **dadurch gekennzeichnet, daß** jede Zone Bereiche der Bergabschnitte (12) umfaßt, und zumindest einige der Bereiche der Bergabschnitte (12), welche in jeder Zone beinhaltet sind, eine sequentielle bzw. aufeinanderfolgende konkave und konvexe Konfiguration aufweisen, und zwar aus der Längsrichtung gesehen, wobei sich jede der Konfigurationen von dem Schlitz entlang der umfänglichen Richtung so erstreckt, daß in den zwei Zonen weibliche (14) und männliche (19) Verriegelungs- bzw. Sperreinrichtungen ausgebildet sind bzw. werden, und zwar nur an den zumindest einigen der Bereiche der Bergabschnitte (12) welche in jeder der Zonen beinhaltet sind, so daß das Rohr, welcher den Kabelbaum bedeckt wie gewünscht gebogen werden kann, wodurch die männliche Verriegelungseinrichtungen (19) gepaßt werden mit den weiblichen Verriegelungseinrichtungen (14) von dem Inneren des Rohrs, und die konkaven und konvexen Konfigurationen der männlichen Verriegelungseinrichtungen (19) sicher überlagert werden mit entsprechenden konkaven und konvexen Konfigurationen der weiblichen Verriegelungseinrichtungen (14).

2. Wellrohr (10) gemäß Anspruch 1, wobei die aufeinanderfolgende konkave und konvexe Konfiguration, welche die weiblichen Verriegelungseinrichtungen (14) ausbildet, umfaßt eine Einführungs-konvexe Form (15) mit einem Querschnitt von L-Form, eine Stopper-konkave Form (16) und eine Stopperkonvexe Form (17), und wobei die aufeinanderfolgende konkave und konvexe Konfiguration, welche die männlichen Verriegelungseinrichtungen (19) ausbildet, umfaßt eine Aufnahme-konvexe Form (20) mit einem Querschnitt von invertierter V-Form, eine Stopper-konkave Form (21) und eine Stopperkonvexe Form (22).

3. Wellrohr (10) gemäß Anspruch 1 oder 2, welcher ferner Positionierungskonkave Formen (18, 23) umfaßt.

4. Wellrohr (10) gemäß einem der Ansprüche 1 bis 3, welcher ferner eine gekerbte bzw. geschlitzte Linie (24) beinhaltet.

5. Wellrohr (10) gemäß einem der Ansprüche 1 bis 4, wobei die weiblichen Verriegelungseinrichtungen (14) eine größere Breite (W1) entlang der Längsrichtung aufweisen als die (W2) der männlichen Verriegelungseinrichtungen (19).

6. Wellrohr (10) gemäß einem der Ansprüche 1 bis 5, wobei die weiblichen Verriegelungseinrichtungen (14) eine aufeinanderfolgend konvexe, konkave und konvexe Konfiguration (15, 16, 17, 18) aufweisen, wobei die Konfiguration eine Serie von aufeinanderfolgenden L-Formen ausbildet, und zwar wenn aus der Längsrichtung gesehen, und sich von dem Schlitz entlang der umfänglichen Richtung erstreckt, während die männlichen Verriegelungseinrichtungen (19) eine aufeinderfolgende konvexe, konkave und konvexe Konfiguration (20, 21, 22, 23) aufweisen, wobei die Konfiguration eine Serie von aufeinanderfolgenden V-Formen ausbildet, und zwar aus der Längsrichtung gesehen, und sich von dem Schlitz (11) in der umfänglichen Richtung erstrecken, wodurch die Vielzahl von elektrischen Drähten (W) beladen bzw. eingeführt werden durch Öffnen des Schlitzes und wodurch der Schlitz geschlossen und verriegelt wird durch Überlagern der weiblichen Verriegelungseinrichtung und männlichen Verriegelungseinrichtungen.

7. Verfahren des automatischen Beladens bzw. Einführens und Verriegelns bzw. Sperrens einer Vielzahl von elektrischen Kabeln bzw. Leitungen bzw. Drähten (W) in einem Wellrohr bzw. -röhre bzw. -schlauch (10) gemäß einem der Ansprüche 1 bis 6, wobei das Rohr einen Schlitz (11) umfaßt, **dadurch gekennzeichnet, daß** das Rohr ferner weibliche (14) und männliche (19) Verriegelungs- bzw. Sperreinrichtungen umfaßt, und das Verfahren die folgenden Schritte umfaßt:
a) Vorbereiten einer Vorrichtung (30) umfassend eine rohr- bzw. röhrenbzw. -schlauchförmige Führungseinheit (32) und eine rohr- bzw. röhrenbzw. schlauchförmige Verriegelungs- bzw. Sperreinheit (33), welche sich jeweils in eine Längsrichtung erstrecken, wobei die Führungseinheit einen oberen Vorsprungsteil (34a, 34b), einen unteren Schlitzöffnungsteil (35, 35') und einen geneigten bzw. schrägen Rohr- bzw. Röhren- bzw. Schlauchteil (32a, 32b) dazwischen äufweist und mit ersten und zweiten Enden versehen ist, wobei der schräge Rohrteil schräg bzw. schief angeordnet ist von dem oberen Vorsprungsteil an dem ersten Ende in Richtung des unteren Schlitzöffnungsteils an dem zweiten Ende, wobei die Verriegelungseinheit erste und zweite Enden aufweist und derart ausgestaltet ist, daß sie das Wellrohr beinhalten kann und die weiblichen und männlichen Verriegelungseinrichtungen verriegeln kann, wobei das zweite Ende der rohrförmigen Führungseinheit longitudinal bzw. in Längsrichtung verbunden ist, so daß der schräge Rohrteil und die rohrförmige Verriegelungseinheit angeordnet sind mit einer geeigneten Neigung in der Längsrichtung;
b) Beladen bzw. Einführen der Vielzahl von elektrischen Drähten in die röhrenförmigen Führungs- und Verriegelungseinheiten;
c) seitliches Passen des unteren Schlitzöffnungsteils der rohrförmigen Führungseinheit in den Schlitz, während das Wellrohr in die rohrförmige Verriegelungseinheit gepaßt wird; und
d) Bewirken einer relativen Bewegung zwischen der rohrförmigen Verriegelungseinheit und dem Wellrohr, wodurch nacheinander der Schlitz geöffnet wird, die elektrischen Drähte in das Wellrohr eingeführt werden und die weiblichen und männlichen Verriegelungseinrichtungen verriegelt werden.

8. Vorrichtung (30) zum Beladen bzw. Einführen und Verriegeln bzw. Sperren einer Vielzahl von elektrischen Kabeln bzw. Drähten bzw. Leitungen (W) in ein Wellrohr bzw. eine Wellröhre bzw. einen Wellschlauch gemäß einem der Ansprüche 1 bis 6, **dadurch gekennzeichnet, daß** die Vorrichtung umfaßt:
a) eine rohr- bzw. röhren- bzw. schlauchförmige Führungseinheit (32) zum Führen der Vielzahl voll elektrischen Drähten, wobei die Einheit erste und zweite Enden aufweist und zumindest einen schrägen bzw. geneigten Rohr- bzw. Röhren- bzw. Schlauchteil (32a, 32b) aufweist, welcher sich schräg bzw. schief von dem ersten Ende in Richtung des zweiten Endes erstreckt, wobei der schräge Rohrteil einen äußeren Durchmesser aufweist, welcher geringer ist als der innere Durchmesser des Wellrohrs; und
b) eine rohr- bzw. röhren- bzw. schlauchförmige Verriegelungs- bzw. Sperreinheit (33) zum Verriegeln bzw. Sperren des Schlitzes, wobei die Verriegelungseinheit ein erstes und zweites Ende aufweist, wobei die Einheit eine innere kreisförmige Fläche bzw. Oberfläche entlang einer Längsrichtung und einen graduell abnehmenden inneren Durchmesser von dem ersten Ende in Richtung des zweiten Endes entlang der Längsrichtung aufweist, wobei das zweite Ende einen inneren Durchmesser aufweist, welcher gleich ist zu dem äußeren Durchmesser des Wellrohrs, wenn es verriegelt ist, wobei die rohrförmige Verriegelungseinheit derart ausgestaltet ist, daß sie bei der Verwendung das Wellrohr beinhaltet und die weiblichen und männlichen Verriegelungseinheiten verriegelt, wobei das zweite Ende der rohrförmigen Führungseinheit und das erste Ende der rohrförmigen Verriegelungseinheit in Längsrichtung verbunden sind, so daß der schräge Rohrteil und die rohrförmige Verriegelungseinheit angeordnet sind mit geeigneten Neigungen in der Längsrichtung und bei der Verwendung angepaßt sind, um die Vielzahl von elektrischen Drähten (W) zu beinhalten, so daß der Schlitzöffnungsteil in den Schlitz (11) eingeführt ist, wobei die rohrförmige Verriegelungseinheit das Wellrohr beinhaltet und so daß, wenn eine relative Bewegung zwischen der rohrförmigen Führungseinheit und dem Wellrohr auftritt, die Vielzahl der elektrischen Drähte transferiert wird in das Wellrohr, wobei die weiblichen (14) und männlichen (19) Verriegelungseinrichtungen nach und nach bzw. graduell näher zueinander gebracht werden in Richtung des zweiten Endes der rohrförmigen Verriegelungseinheit und der Schlitz verriegelt wird.

9. Vorrichtung gemäß Anspruch 8, wobei die rohrförmige Führungseinheit (32) ferner umfaßt einen Schlitzöffnungsteil (35, 35') mit einem im wesentlichen runden Querschnitt an dem ersten Ende der rohrförmigen Führungseinheit und der Schlitzöffnungsteil nach und nach bzw. graduell mit dem schrägen Rohrteil (32a, 32b) verschmilzt in Richtung des zweiten Endes davon, wodurch, wenn eine relative Bewegung zwischen dem Schlitzöffnungsteil und dem Wellrohr auftritt, der Schlitz nach und nach geöffnet wird und die Vielzahl von elektrischen Drähten (W) in das Wellrohr beladen bzw. eingeführt werden.

10. Vorrichtung gemäß Anspruch 8 oder 9, wobei die rohrförmige Führungseinheit (32), welche den schrägen Rohrteil (32a, 32b) und den Schlitzöffnungsteil (35) umfaßt, einerseits und die rohrförmige Verriegelungseinheit (33) andererseits jeweils ein integrales Material sind mit zwei Flügeln und ausgebildet werden durch Biegen des Materials in die zwei Flügel an der Seite des Schlitzöffnungsteils, wodurch ein Paar von entgegengesetzten bzw. gegenüberliegenden Vorsprungsteilen (34a, 34b) ausgebildet werden entlang der Längsrichtung an der Position, welche distal bzw. entfernt ist zu dem Schlitzöffnungsteil, und die Vielzahl von elektrischen Drähten (W) eingeführt bzw. beladen werden durch Öffnen des Paars von Vorsprungsteilen, und wobei die rohrförmige Führungseinheit und die rohrförmige Verriegelungseinheit verbunden werden durch die Vorsprungsteile.

11. Vorrichtung gemäß einem der Ansprüche 8 bis 10, wobei die innere kreisförmige Fläche bzw. Oberfläche der rohrförmigen Verriegelungseinheit (33) versehen ist mit einem Paar Längsrippen (33f, 33g), welche voneinander beabstandet sind und angepaßt sind, bei der Verwendung mit entsprechenden konkaven Formen (18, 23) der weiblichen (14) und männlichen (19) Verriegelungseinheiten zu passen, wobei die Beabstandung bzw. der Abstand des Paars von Rippen graduell bzw. nacheinander angenähert bzw. verkleinert wird von dem ersten Ende der rohrförmigen Verriegelungseinheit in Richtung des zweiten Endes davon, wodurch, wenn das Wellrohr (10) sich dem zweiten Ende nähert, die weiblichen und männlichen Verriegelungseinrichtungen überlagert werden durch eine Kraft, welche bewirkt, bzw. ausgeübt wird durch die sich nähernden bzw. nähernden Rippen.

## Revendications

1. Tube ondulé (10) pour protéger un faisceau de câbles, le dit tube s'étendant dans une direction longitudinale et ayant une surface extérieure de section transversale circulaire qui présente des régions de crête (12) et de creux (13) alternées le long de la dite direction longitudinale, le dit tube comportant une fente longitudinale (11), définissant ainsi deux zones proches de la fente et mutuellement en regard de part et d'autre de la fente, **caractérisé en ce que** chaque zone comprend des portions des dites régions de crête (12), et au moins certaines des dites portions des dites régions de crête (12) incluses dans chaque zone ont une configuration séquentielle concave et convexe, vues dans la dite direction longitudinale, chacune des dites configurations s'étendant à partir de la dite fente le long de la dite direction circonférentielle de sorte que, dans les dites deux zones, des éléments de verrouillage femelles (14) et mâles (19) sont formés, respectivement, seulement sur les dites au moins certaines des dites portions des dites régions de crête (12) incluses dans chaque dite zone, d'une manière telle que le tube couvrant le faisceau de câbles peut être courbé comme désiré, les dits éléments de verrouillage mâles (19) étant ainsi accouplés avec les dits éléments de verrouillage femelles (14) à partir de l'intérieur du dit tube, et les dites configurations concaves et convexes des dits éléments de verrouillage mâles (19) sont superposées de façon sûre aux configurations concaves et convexes correspondantes des dits éléments de verrouillage femelles (14).

2. Tube ondulé (10) selon la revendication 1, dans lequel la dite configuration séquentielle concave et convexe formant les dits éléments de verrouillage femelles (14) comprend une forme convexe d'insertion (15) à section transversale en L, une forme concave d'arrêt (16) et une forme convexe d'arrêt (17), et dans lequel la dite configuration séquentielle concave et convexe formant les dits éléments de verrouillage mâles (19) comprend une forme de réception convexe (20) à section transversale en V inversé, une forme concave d'arrêt (21) et une forme convexe d'arrêt (22).

3. Tube ondulé (10) selon la revendication 1 ou 2, qui comprend en outre des formes de positionnement concaves (18, 23).

4. Tube ondulé (10) selon une quelconque des revendications 1 à 3, qui comprend en outre une ligne en encoche (24).

5. Tube ondulé (10) selon une quelconque des revendications 1 à 4, dans lequel les dits éléments de verrouillage femelles (14) ont une largeur plus grande (W1) le long de la dite direction longitudinale que celle (W2) des dits éléments de verrouillage mâles (19).

6. Tube ondulé (10) selon une quelconque des revendications 1 à 5, dans lequel les dits éléments de verrouillage femelles (14) ont une configuration séquentielle convexe, concave et convexe (15, 16, 17, 18), la dite configuration définissant une série de formes en L successives, vues dans la dite direction longitudinale, et s'étendant à partir de la dite fente le long de la dite direction circonférentielle, tandis que les dits éléments de verrouillage mâles (19) ont une configuration séquentielle convexe, concave et convexe (20, 21, 22, 23), la dite configuration définissant une série de formes en V successives, vues dans la dite direction longitudinale et s'étendant à partir de la dite fente (11) dans la dite direction circonférentielle, de sorte que la dite pluralité de fils électriques (W) sont chargés par ouverture de la dite fente et de sorte que la dite fente est fermée et verrouillée par superposition des dits éléments de verrouillage femelles et des dits éléments de verrouillage mâles.

7. Procédé de changement et verrouillage automatiques d'une pluralité de fils électriques (W) dans un tube ondulé (10) selon une quelconque des revendications 1 à 6, le dit tube comportant une fente (11), **caractérisé en ce que** le dit tube comprend en outre des éléments de verrouillage femelles (14) et mâles (19), le dit procédé comprenant les étapes de :
(a) préparation d'un dispositif (30) qui comprend une unité de guidage tubulaire (32) et une unité de verrouillage tubulaire (33), s'étendant chacune dans une direction longitudinale, la dite unité de guidage ayant une partie en saillie supérieure (34a, 34b), une partie d'ouverture de fente inférieure (35, 35') et une partie tubulaire inclinée (32a; 32b) entre ces dernières, et ayant une première et une deuxième extrémités, la dite partie tubulaire inclinée étant disposée obliquement par rapport à la dite partie en saillie supérieure, à la dite première extrémité, vers la dite partie d'ouverture de fente inférieure à la dite deuxième extrémité, la dite unité de verrouillage ayant une première et une deuxième extrémités et étant configurée de sorte qu'elle peut contenir le dit tube ondulé et verrouiller les dits éléments de verrouillage femelles et mâles, la dite deuxième extrémité de la dite unité de guidage tubulaire et la dite première extrémité de la dite unité de verrouillage tubulaire étant longitudinalement reliées, de sorte que la dite partie tubulaire inclinée et la dite unité de verrouillage tubulaire sont agencées avec une inclinaison appropriée dans la dite direction longitudinale ;
(b) chargement de la dite pluralité de fils électriques dans les dites unités de guidage tubulaire et de verrouillage ;
(c) ajustement latéral de la dite partie d'ouverture de fente inférieure de la dite unité de guidage tubulaire dans la dite fente, tout en plaçant le dit tube ondulé dans la dite unité de verrouillage tubulaire ; et
(d) génération d'un mouvement relatif entre la dite unité de verrouillage tubulaire et le dit tube ondulé, de sorte que, successivement, la dite fente est ouverte, les dits fils électriques sont chargés dans le dit tube ondulé, et les dits éléments de verrouillage femelles et mâles sont verrouillés.

8. Dispositif (30) pour le chargement et le verrouillage d'une pluralité de fils électriques (W) dans un tube ondulé selon une quelconque des revendications 1 à 6, **caractérisé en ce qu'**il comprend :
(a) une unité de guidage tubulaire (32) pour guider la dite pluralité de fils électriques, la dite unité ayant une première et une deuxième extrémités et comprenant au moins une partie tubulaire inclinée (32a, 32b) s'étendant obliquement à partir de la dite première extrémité, vers la dite deuxième extrémité, la dite partie tubulaire inclinée ayant un diamètre extérieur plus petit que le diamètre intérieur du dit tube ondulé ; et
(b) une unité de verrouillage tubulaire (33) pour verrouiller la dite fente, la dite unité de verrouillage ayant une première et une deuxième extrémités, la dite unité ayant une surface intérieure circulaire le long d'une direction longitudinale et un diamètre intérieur progressivement décroissant à partir de la dite première extrémité vers la dite deuxième extrémité le long de la dite direction longitudinale, la dite deuxième extrémité ayant le dit diamètre intérieur égal au diamètre extérieur du dit tube ondulé lorsqu'il est verrouillé, la dite unité de verrouillage tubulaire étant configurée de sorte que, en utilisation, elle contient le dit tube ondulé et verrouille les dits éléments de verrouillage femelles et mâles, la dite deuxième extrémité de la dite unité de guidage tubulaire et la dite première extrémité de la dite unité de verrouillage tubulaire étant longitudinalement connectées, de sorte que la dite partie tubulaire inclinée et la dite unité de verrouillage tubulaire sont disposées suivant des inclinaisons appropriées dans la dite direction longitudinale et prévues, en utilisation, pour contenir la dite pluralité de fils électriques (W), de sorte que la dite partie d'ouverture de fente est insérée dans la dite fente (11), la dite unité de verrouillage tubulaire contient le dit tube ondulé et de sorte que, lorsqu'il y a un mouvement relatif entre la dite unité de guidage tubulaire et le dit tube ondulé, la dite pluralité de fils électriques sont transférés dans le dit tube ondulé, les dits éléments de verrouillage femelles (14) et mâles (19) sont progressivement rapprochés les uns des autres vers la dite deuxième extrémité de la dite unité de verrouillage tubulaire et la dite fente est verrouillée.

9. Dispositif selon la revendication 8, dans lequel la dite unité de guidage tubulaire (32) comprend en outre une partie d'ouverture de fente (35, 35') ayant une section transversale sensiblement ronde à la dite première extrémité de la dite unité de guidage tubulaire, et la dite partie d'ouverture de fente se raccorde progressivement avec la dite partie tubulaire inclinée (32a, 32b) vers sa dite deuxième extrémité de sorte que, lorsqu'il y a un mouvement relatif entre la dite partie d'ouverture de fente et le dit tube ondulé, la dite fente s'ouvre progressivement et on charge la dite pluralité de fils électriques (W) dans le dit tube ondulé.

10. Dispositif selon la revendication 8 ou 9, dans lequel la dite unité de guidage tubulaire (32) comprenant la dite partie tubulaire inclinée (32a, 32b) et la dite partie d'ouverture de fente (35) d'une part, et la dite unité de verrouillage tubulaire (33) d'autre part, sont respectivement une matière unitaire ayant deux ailes et elles sont formées par pliage de la dite matière en les dites deux ailes du côté de la dite pièce d'ouverture de fente, de sorte que deux parties en saillie opposées (34a, 34b) sont formées le long de la dite direction longitudinale à la position distale par rapport à la dite partie d'ouverture de fente et la dite pluralité de fils électriques (W) sont chargés par ouverture des dites deux parties en saillie, et dans lequel la dite unité de guidage tubulaire et la dite unité de verrouillage tubulaire sont connectées par les dites parties en saillie.

11. Dispositif selon une quelconque des revendications 8 à 10, dans lequel la dite surface circulaire intérieure de la dite unité de verrouillage tubulaire (33) comporte deux nervures longitudinales (33f, 33g) mutuellement espacées et prévues pour s'accoupler, en utilisation, avec des formes concaves correspondantes (18, 23) des dits éléments de verrouillage femelles (14) et mâles (19), le dit espacement des dites deux nervures étant progressivement réduit à partir de la dite première extrémité de la dite unité de verrouillage tubulaire vers sa dite deuxième extrémité de sorte que, lorsque le dit tube ondulé (10) s'approche de la dite deuxième extrémité, les dits éléments de verrouillage femelles et mâles sont superposés sous l'action d'une force exercée par les dites nervures dont l'espacement diminue.
